# EUROPÄISCHE PATENTSCHRIFT

(11) **EP 2 164 753 B1**
(45) Veröffentlichungstag und Bekanntmachung des Hinweises auf die Patenterteilung: **25.06.2014**
(21) Anmeldenummer: 08760177.9
(22) Anmeldetag: 29.05.2008
(51) Int. Cl.: B63H 21/16, B63H 21/20, B63H 21/21

(54) **VERFAHREN UND VORRICHTUNG ZUM BETRIEB EINES SCHIFFS-HYBRIDANTRIEBSSYSTEMS**
METHOD AND APPARATUS FOR OPERATION OF A MARINE VESSEL HYBRID PROPULSION SYSTEM
PROCÉDÉ ET DISPOSITIF POUR FAIRE FONCTIONNER UN SYSTÈME MOTEUR HYBRIDE POUR UN NAVIRE

(30) Priorität: 01.06.2007 DE 102007025863
(43) Veröffentlichungstag der Anmeldung: 24.03.2010
(73) Patentinhaber: Siemens Aktiengesellschaft, 80333 München (DE)
(72) Erfinder: RZADKI, Wolfgang, 21509 Glinde (DE); SCHULZE HORN, Hannes, 45966 Gladbeck (DE)
(86) Internationale Anmeldenummer: PCT/EP2008/056585
(87) Internationale Veröffentlichungsnummer: WO 2008/145684

(56) Entgegenhaltungen:
- DE-A1- 3 505 815
- DE-A1- 4 432 483
- DE-A1- 10 111 910
- DE-C1- 4 340 747
- JP-A- 5 246 386
- JP-A- 2004 255 972

## Beschreibung

Die Erfindung betrifft ein Verfahren zum Betrieb eines Schiffs-Hybridantriebssystems gemäß Oberbegriff des Patentanspruchs 1; ein derartiges Schiffs-Hybridantriebssystem ist beispielsweise durch die DE 101 11 910 A1 bekannt. Die Erfindung betrifft weiterhin eine Vorrichtung zur Durchführung des Verfahrens.

Aus der WO02/47974 A1 ist einSchiffs-Hybridantriebssystem mit einem Verstellpropeller als Vortriebseinheit und einem Hauptdieselmotor und einem Elektromotor als Antriebseinheiten für die Vortriebseinheit bekannt. Der Elektromotor ist ständig eingeschaltet und sorgt in Verbindung mit dem Verstellpropeller dafür, den Hauptdieselmotor in einem günstigen Betriebspunkt zu halten. Zusätzlich werden bei einer gegebenen beschleunigungsfreien Schiffsgeschwindigkeit der Elektromotor und der Propeller derart geregelt, dass der gesamte Treibstoffbedarf für den Hauptdieselmotor und eine Dieselgeneratoranlage zum Erzeugen elektrischer Energie für den Elektromotor minimal wird. Beide Antriebseinheiten sind somit gemeinsam ständig mechanisch mit der Vortriebseinheit gekoppelt und treiben diese auch gemeinsam an.

Die DE 101 11 910 A1 offenbart eine Antriebsanlage für Schiffe mit zwei hintereinander angeordneten und gegenläufgen Propellern als Vortriebseinheiten und einem Dieselmotor und einem Elektromotor als Antriebseinheiten, wobei der hintere Propeller von einem Dieselmotor und der vordere Propeller von einem Elektromotor angetrieben wird. Jede der Antriebseinheiten ist somit mit nur genau einer Vortriebseinheit mechanisch gekoppelt bzw. koppelbar um diese anzutreiben.

Aus der DE 100 63 338 B4 ist ein Schiffs-Hybridantriebssystems mit einem Elektromotor und einem als Gasturbine ausgebildeten Verbrennungsmotor als Antriebseinheiten bekannt, die je nach Anforderung, z.B. der Schiffsgeschwindigkeit, einzeln oder im Verbund einen Propeller eines Schiffes antreiben. Der Verbrennungsmotor treibt hierbei bei hohen Geschwindigkeiten und der Elektromotor bei niedrigen Geschwindigkeiten den Propeller an. Hierzu sind die beiden Antriebseinheiten zumindest zeitweilig mit dem Propeller koppelbar.

JP 05246386 A offenbart ein Schiffs-Hybridantriebssystem mit einer Verbrennungskraftmaschine und einem Elektromotor als Antriebseinheiten, die in Abhängigkeit von der Schiffsgeschwindigkeit bzw. der daraus abgeleiteten Gesamtantriebsleistung einzeln oder im Verbund einen Propeller antreiben.

DE 4340747 C1 offenbart eine Schiffspropulsionsanlage mit zwei hintereinander angeordneten und gegenläufigen Propellern, wobei der erste Propeller mechanisch von einem Verbrennungsmotor und der zweite Propeller mechanisch von einem elektrischen Antriebsmotor angetrieben wird.

JP 2004255972 A offenbart ein Schiffs-Hybridantriebssystem, bei dem ein Elektromotor und eine Maschine einzeln oder im Verbund einen Propeller antreiben.

DE 3505815 A1 offenbart eine Schiffsantriebseinrichtung mit wenigstens einer auf eine Propellerwelle arbeitenden Hauptantriebsmaschine und mindestens einer von der bzw. den Hauptmaschinen antreibbaren Hilfsmaschine.

DE 4432483 A1 offenbart einen Zusatzantrieb für ein Seeschiff, wobei ein Dieselmotor als Hauptmaschine über eine Wellenanlage einen Propeller antreibt und ein nachrüstbarer Dieselmotor mit einem Generator zum Betrieb eines Elektromotors mit der Wellenanlage zur Erhöhung der Antriebsleistung der Hauptmaschine koppelbar ist.

EP 1894835 A2 offenbart ein Schiff mit zumindest einem Elektromotor als Hauptmaschine zum Antrieb des Schiffes, wobei der Elektromotor eine Wellenanlage antreibt, die mit einem Schiffpropeller gekuppelt ist und auch als Generator betreibbar ist, und zumindest einer mit der Wellenanlage kuppelbaren Verbrennungskraftmaschine als Zusatzantrieb zur Erreichung der Höchstgeschwindigkeit des Schiffes.

Derartige oder ähnliche Hybridantriebssysteme mit beilspielsweise zwei Elektromotoren, einer Gasturbine und zwei Propellern sollen in Zukunft insbesondere auf Marineschiffen, wie z.B. Fregatten und Korvetten, und auf Superyachten Anwendung finden. Solche Schiffe sollen auf der einen Seite flexibel einen auf eine bestimmte Einsatzsituation optimierten Betrieb ermöglichen. Beispielsweise kann ein Schiffsbetrieb mit möglichst geringen Emissionen zur Verringerung der Detektierbarkeit des Schiffes, ein Betrieb mit maximalem Beschleunigungsvermögen im Gefechtsfall oder ein Betrieb mit möglichst geringem Treibstoffverbrauch gefordert sein.

Auf der anderen Seite sollen diese Schiffe mit einer relativ kleinen Besatzung betrieben werden. Dies ist meist problemlos möglich, wenn die Mannschaft frei von äußeren Einflüssen wie z.B. Zeitdruck ist. Unter physischer und/oder psychischer Belastung, z.B. im Gefechtsfall, kann dies jedoch zu Fehlern und somit zur Einstellung von Betriebszuständen des Hybridantriebssystems führen, die nicht optimal für den gerade vorliegenden Einsatzfall sind.

Es ist deshalb Aufgabe vorliegender Erfindung, ein Verfahren anzugeben, mit dem ein für eine vorliegende Einsatzsituation optimaler Betrieb des Hybridantriebssystems, insbesondere bei einer nur kleinen Besatzung des Schiffes, sichergestellt werden kann. Außerdem ist es Aufgabe vorliegender Erfindung, eine für die Durchführung des Verfahrens besonders geeignete Vorrichtung anzugeben.

Die Lösung der auf das Verfahren gerichteten Aufgabe gelingt erfindungsgemäß durch ein Verfahren gemäß Patentanspruch 1. Ein für die Durchführung des Verfahrens besonders geeignete Vorrichtung ist Gegenstand des Patentanspruchs 17. Vorteilhafte Ausgestaltungen sind jeweils Gegenstand der Unteransprüche.

Das erfindungsgemäße Verfahren sieht vor, dass die Antriebseinheiten hinsichtlich ihrer jeweiligen Leistungsabgabe an die zumindest eine Vortriebseinheit von einer Steuereinrichtung in Abhängigkeit von einem vorgebbaren Sollwert, z.B. einem Sollwert für die Propeller-Drehzahl oder der Schiffsgeschwindigkeit, und einer vorgebbaren Betriebsart derart gesteuert werden, dass durch die Summe dieser Leistungsabgaben eine von dem Sollwert abhängige Gesamtleistung an die zumindest eine Vortriebseinheit abgegeben wird, wobei die Aufteilung dieser Gesamtleistungsabgabe auf die Leistungsabgaben der einzelnen Antriebseinheiten in Abhängigkeit von dem Sollwert und der Betriebsart erfolgt.

Über die Aufteilung der Gesamtleistung auf die Antriebseinheiten können die Betriebspunkte der einzelnen Antriebseinheiten beeinflusst und somit ein für eine vorgegebene Betriebsart optimaler Betriebspunkt des Hybridantriebssystems eingestellt werden. Die Betriebspunkte der einzelnen Antriebseinheiten selbst müssen sich hierbei nicht zwangsläufig in einem Optimum befinden. Wesentlich ist der Betriebspunkt des Gesamtsystems, d.h. des gesamten Hybridantriebssystems, vorzugsweise einschließlich von Verbrennungskraftmaschinen zur Erzeugung der elektrischen Energie für den zumindest einen Elektromotor.

Die zumindest eine oder jede Vortriebseinheit ist hierzu während des Betriebs des Hybridantriebssystems bevorzugt mit jeweils zumindest zwei Antriebseinheiten, vorzugsweise mit jeweils zumindest einem Elektromotor und zumindest einer Verbrennungskraftmaschine, mechanisch fest gekoppelt oder zumindest koppelbar. Die zumindest eine oder jede Vortriebseinheit kann dann von nur einer einzigen der Antriebseinheiten oder bei einem Verbundbetrieb gleichzeitig von den zumindest zwei Antriebseinheiten angetrieben werden. Unterschiedliche Betriebscharakteristiken der Antriebseinheiten, wie sie insbesondere zwischen einer Verbrennungskraftmaschine und einem Elektromotor vorliegen, können dann besonderes gut genutzt werden, um einen optimalen Betriebspunkt des Gesamtsystems einzustellen.

Bevorzugt ist die zumindest eine Verbrennungskraftmaschine, vorzugsweise auch der zumindest eine Elektromotor, nicht mechanisch fest mit einer anzutreibenden Vortriebseinheit gekoppelt, sondern sie wird während des Betriebs des Hybridantriebssystems bedarfsabhängig mit der von ihr anzutreibenden Vortriebseinheit mechanisch gekoppelt bzw. von ihr entkoppelt. Eine während des Betriebs des Hybridantriebssystems zeitweilig nicht für den Antrieb einer Vortriebseinheit benötigte Antriebseinheit kann dann von der Vortriebseinheit entkoppelt werden und muss dann nicht von der (den) die Vortriebseinheit antreibenden Antriebseinheit(en) mitbewegt werden. Dies ist insbesondere von Vorteil im Fall der zumindest einen Verbrennungskraftmaschine mit ihrer häufig relativ großen zu bewegenden Masse.

Über die Steuerung der Leistungsaufteilung kann hierbei gleichzeitig auch eine Steuerung des Zu- oder Abschaltens von Antriebseinheiten zu bzw. von der zumindest einen Vortriebseinheit, vorzugsweise einschließlich eines mechanischen Koppelns und Entkoppelns von Antriebseinheiten mit bzw. von der zumindest einen Vortriebseinheit, erfolgen. Die Steuerung des Koppelns oder Entkoppeln von Antriebseinheiten schließt von Vorteil zumindest das Koppeln und Entkoppeln der zumindest einen Verbrennungskraftmaschine, vorzugsweise zusätzlich auch das Koppeln und Entkoppeln des zumindest einen Elektromotors, mit ein.

Da die Steuerung von der Besatzung nur die Vorgabe weniger Steuerparameter (z.B. Sollwert für Propellerdrehzahl, Betriebsart) erfordert, kann ein optimierter Betrieb des Schiffes auch bei einer nur kleinen Besatzung, und hierbei auch und unter physischer und/oder psychischer Belastung der Besatzung, sichergestellt werden.

Die vorgebbare Betriebsart kann hierbei beispielsweise eine Betriebsart sein, in der die Abgasemissionen und/oder Geräuschemissionen und/oder die Wärmeemissionen des Hybridantriebssystems, vorzugsweise einschließlich von Verbrennungskraftmaschinen für die Erzeugung der elektrischen Energie für den zumindest einen Elektromotor, minimal sind.

Die vorgebbare Betriebsart kann aber auch eine Betriebsart sein, in der der Gesamttreibstoffverbrauch des Hybridantriebssystems, vorzugsweise einschließlich von Verbrennungskraftmaschinen für die Erzeugung der elektrischen Energie für den zumindest einen Elektromotor, minimal ist.

Die Gesamtleistungsabgabe und die Aufteilung der Gesamtleistungsabgabe auf die Antriebseinheiten kann besonders einfach und exakt anhand von Kenndaten und/oder von Kennlinien des Verbundes der Antriebseinheiten gesteuert werden.

Bevorzugt sind in der Steuereinrichtung für unterschiedliche Betriebsarten jeweils unterschiedliche Kenndaten und/oder Kennlinien gespeichert, wobei die für die Steuerung der Leistungsaufteilung bei einer vorgebbaren Betriebsart relevanten Kenndaten und/oder Kennlinien in Abhängigkeit von der vorgebbaren Betriebsart ausgewählt werden.

Der Sollwert kann dabei von einem manuell bedienbaren Fahrhebel oder einem Autopilotsystem vorgegeben werden.

Bevorzugt erfolgt eine Zuschaltung oder Abschaltung einer Leistungsabgabe einer Antriebseinheit an bzw. von einer Vortriebseinheit ohne Momentenstöße.

Gemäß einer besonders vorteilhaften Ausgestaltung kann jede der Antriebseinheiten eine maximale Leistung abgeben, die kleiner als die für den Vortrieb des Schiffes maximal benötigte Gesamtleistung ist. Zum Erreichen der maximal benötigten Gesamtleistung müssen somit zumindest zwei Antriebseinheiten beitragen. Da die maximal benötigte Gesamtleistung im Normalfall aber nur selten benötigt wird, können die Antriebseinheiten auf eine kleinere Leistung optimiert ausgelegt werden und hierdurch der Treibstoffverbrauch, Platzbedarf und das Gewicht der Antriebseinheiten verringert werden.

Bevorzugt kann der Elektromotor unterhalb seiner Grenzkennlinie in einem Drehzahlbereich von Null bis zur maximalen Drehzahl der Vortriebseinheit(en) stufenlos Drehmoment abgeben. Gegebenenfalls wird er hierbei bei hohen Drehzahlen bis zur maximalen Drehzahl im Feldschwächebereich betrieben. Der Elektromotor kann somit besonders flexibel zur momentenstoßfreien Einstellung gewünschter optimaler Betriebspunkte des Hybridantriebssystems über den gesamten Drehzahlbereich der Vortriebseinheiten genutzt werden.

Erfindungsgemäß steuert die Steuerungseinrichtung die Gesamtleistungsabgabe und/oder die Aufteilung der Gesamtleistungsabgabe auf die Leistungsabgaben der einzelnen Antriebseinheiten zusätzlich unter Berücksichtigung von Grenzwerten für deren zeitliche Änderung. Durch derartige Begrenzungen, z.B. Hochlauf- oder Rücklaufbegrenzungen, können Zeitkonstanten des Schiffspropellers in Bezug auf die Umsetzung des Schubs des Propellers in das Wasser oder bei der Erzeugung der elektrischen Energie für den Elektromotor berücksichtigt werden. Leistungskomponenten wie Motoren, Stromrichter, Schalter etc. können somit vor thermischer Überlastung geschützt und Beeinträchtigungen des Schiffsbetriebes, z.B. aufgrund unzulässig hoher Schwankungen der Spannung und/oder Frequenz des Bordnetzes, können vermieden werden.

Von Vorteil werden bei der Steuerung der Leistungsabgaben der Antriebseinheiten durch Drehmomentschwankungen der Vortriebseinheiten verursachte Welligkeiten in zu dem Sollwert korrespondierenden Istwerten, z.B. in von Drehzahlsensoren erfassten Istwerten für die Drehzahl einer Propellerwelle, unterdrückt. Hierdurch können Antriebsmomentschwankungen und somit Geräuschemissionen des Schiffes entgegengewirkt werden, die entstehen, wenn ein Propeller im Fahrwasser Drehmomentschwankungen unterliegt.

Erfindungsgemäß wird durch die Steuereinrichtung die Aufteilung der Gesamtleistungsabgabe zusätzlich in Abhängigkeit von der zeitlichen Änderung des Sollwertes gesteuert. Hierdurch können unnötige Kupplungs- und Getriebeschaltvorgänge vermieden und somit ein hohes Beschleunigungsvermögen erzielt werden.

Besonders gute Möglichkeiten zur Optimierung des Treibstoffverbrauchs sind dann gegeben, wenn der zumindest eine Elektromotor als Hauptantrieb zum Antrieb des Schiffes für einen unteren Geschwindigkeitsbereich des Schiffes und die zumindest eine Verbrennungskraftmaschine alleine oder im Verbund mit dem zumindest einen Elektromotor als Hauptantrieb für einen höheren Geschwindigkeitsbereich des Schiffes bis zur Höchstgeschwindigkeit verwendet wird.

Gemäß einer besonders vorteilhaften Ausgestaltung übernimmt dabei in dem unteren Geschwindigkeitsbereich der zumindest Elektromotor und in dem höheren Geschwindigkeitsbereich die zumindest eine Verbrennungskraftmaschine die Drehzahlführung der Vortriebseinheit(en), wobei im Verbundbetrieb des zumindest einen Elektromotors mit der zumindest einen Verbrennungskraftmaschine die Verbrennungskraftmaschine die Drehzahlführung der Vortriebseinheit(en) übernimmt und der Elektromotor in seiner Drehzahl von der Vortriebseinheit bzw. von der Verbrennungskraftmaschine geführt wird und bestimmt durch die Sollwertvorgabe ein derartiges Drehmoment an die Vortriebseinheit(en) abgibt, dass sich die von der Verbrennungskraftmaschine und dem Elektromotor jeweils abgegebenen Leistungen in der (den) Vortriebseinheit(en) summieren.

Von Vorteil wird das Verfahren bei einem Hybridantriebssystem angewendet, das genau zwei Elektromotoren und genau eine Gasturbine als Antriebseinheiten und genau zwei Propellerwellen mit jeweils einem Propeller als Vortriebseinheiten aufweist, wobei die Propellerwellen durch ein Getriebe geführt sind, über das die Propellerwellen mit der Gasturbine gekoppelt werden können, und wobei jede der Propellerwellen an ihrem dem Propeller abgewandten Ende ohne ein zwischengeschaltetes Getriebe mit jeweils einem der Elektromotoren gekoppelt werden kann.

Eine für die Durchführung des Verfahrens besonders geeignete Vorrichtung umfasst einen Sollwertgeber zur Vorgabe eines Sollwertes, z.B. eines Sollwertes für die Drehzahl eines Propellers oder für die Schiffsgeschwindigkeit, einen Betriebsartengeber zur Vorgabe einer Betriebsart und eine Steuereinrichtung, die dazu eingerichtet ist, die Antriebseinheiten hinsichtlich ihrer jeweiligen Leistungsabgabe an die zumindest eine Vortriebseinheit derart zu steuern, dass durch die Summe dieser Leistungsabgaben eine von dem Sollwert abhängige Gesamtleistung an die zumindest eine Vortriebseinheit abgebbar ist und dabei die Aufteilung dieser Gesamtleistungsabgabe auf die Leistungsabgaben der einzelnen Antriebseinheiten in Abhängigkeit von dem Sollwert und der Betriebsart erfolgt.

Die zumindest eine oder jede Vortriebseinheit ist hierbei bevorzugt während des Betriebs des Hybridantriebssystems mit jeweils zumindest zwei Antriebseinheiten, vorzugsweise mit jeweils zumindest einem Elektromotor und zumindest einer Verbrennungskraftmaschine, mechanisch fest gekoppelt oder zumindest koppelbar.

Von Vorteil ist die zumindest eine Verbrennungskraftmaschine, vorzugsweise auch der zumindest eine Elektromotor, während des Betriebs des Hybridantriebssystems bedarfsabhängig mit der anzutreibenden Vortriebseinheit mechanisch koppelbar und von ihr entkoppelbar.

Dabei ist die Steuereinrichtung von Vorteil dazu eingerichtet, über die Steuerung der Leistungsaufteilung auch das Zuoder Abschalten der Antriebseinheiten zu bzw. von der zumindest einen Vortriebseinheit, vorzugsweise einschließlich eines mechanischen Koppelns oder Entkoppelns von Antriebseinheiten, insbesondere der zumindest einen Verbrennungskraftmaschine, mit bzw. von der zumindest einen Vortriebseinheit, zu steuern.

Der Sollwertgeber kann hierbei ein manuell bedienbarer Fahrhebel oder ein Autopilotsystem sein.

Gemäß einer besonders vorteilhaften Ausgestaltung umfasst die Vorrichtung den einzelnen Antriebseinheiten zugeordnete Antriebssteuerungen zur Steuerung derer jeweiligen Leistungsabgabe, wobei die Steuereinrichtung die Leistungsabgabe der Antriebseinheiten durch eine Vorgabe von Drehzahlsollwerten oder Drehmomentsollwerten an die Antriebssteuerungen steuert.

Zum Schutz von Leistungskomponenten vor thermischer Überlastung und vor Beeinträchtigungen des Schiffsbetriebs weist die Steuereinrichtung Begrenzungsmittel zur Begrenzung von zeitlichen Änderungen der Gesamtleistungsabgabe und/oder der Aufteilung der Gesamtleistungsabgabe auf die einzelnen Antriebseinheiten auf.

Von Vorteil umfasst die Vorrichtung für die Steuerung der Leistungsabgaben der Antriebseinheiten Sensoren zur Erfassung zumindest eines zu dem zumindest einen Sollwert korrespondieren Istwertes, z.B. eines Istwertes für die Drehzahl einer Propellerwelle, und Filtermittel zur Unterdrückung von durch Drehmomentschwankungen der Vortriebseinheiten verursachte Welligkeiten in den Istwerten.

Die im Zusammenhang mit dem erfindungsgemäßen Verfahren bzw. seiner vorteilhaften Ausgestaltungen genannten Vorteile gelten entsprechend für die erfindungsgemäße Vorrichtung bzw. ihre vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: ein Beispiel für ein Hybridantriebssystem für ein Einwellenschiff,
- FIG 2: ein Beispiel für ein Hybridantriebssystem für ein Zweiwellenschiff,
- FIG 3: eine Prinzipdarstellung zur Erläuterung des erfindungsgemäßen Betriebsverfahrens,
- FIG 4: ein Kennlinienfeld zur Steuerung der Leistungsabgabe der Antriebsaggregate eines Hybridantriebes,
- FIG 5: ein Kennlinienfeld einer Gasturbine mit Verstellpropelleranlage und
- FIG 6: ein Hybridantriebssystem mit einer erfindungsgemäßen Vorrichtung.

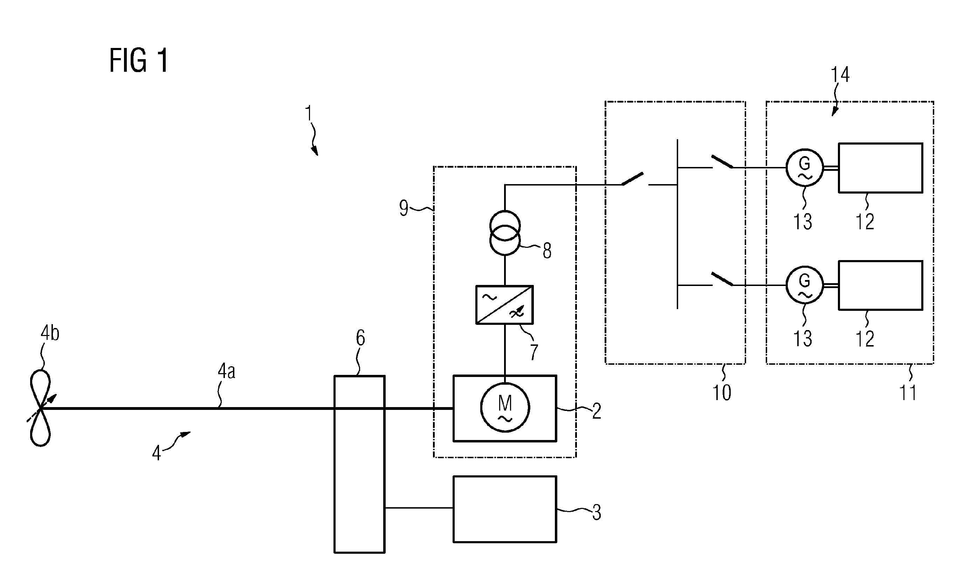

Ein in FIG 1 gezeigtes Hybridantriebssystem 1 für ein Einwellenschiff weist einen Elektromotor 2 und eine Gasturbine 3 als Antriebseinheiten und eine Vortriebseinheit 4 bestehend aus einer Propellerwelle 4a mit einem Fest- oder Verstellpropeller 4b auf. Die Propellerwelle 4a ist durch ein Getriebe 6 geführt, über das die Propellerwelle 4a mit der Gasturbine 3 koppelbar ist. Die Propellerwelle 4a ist an ihrem dem Propeller 4b abgewandten Ende ohne ein zwischengeschaltetes Getriebe mit dem Elektromotor 2 verbunden. Der Elektromotor 2 wird über einen Stromrichter 7 (Stromzwischenkreisumrichter oder Spannungszwischenkreisumrichter) und einen Stromrichtertransformator 8 aus einer Energieverteilungsanlage 10 (in der Regel einer Mittelspannungsschaltanlage, manchmal auch einer Niederspannungsschaltanlage) mit elektrischer Energie versorgt. Der Elektromotor 2, der Stromrichter 7 und der Stromrichtertransformator 8 bilden ein elektrisches Antriebssystem 9.

Die elektrische Energie wird durch eine Energieerzeugungsanlage 11 erzeugt, in der in der Regel mehrere Verbrennungskraftmaschinen 12, z.B. Dieselmotoren oder Gasturbinen, jeweils einen Generator 13, in der Regel eine Drehstrom-Synchronmaschine, antreiben.

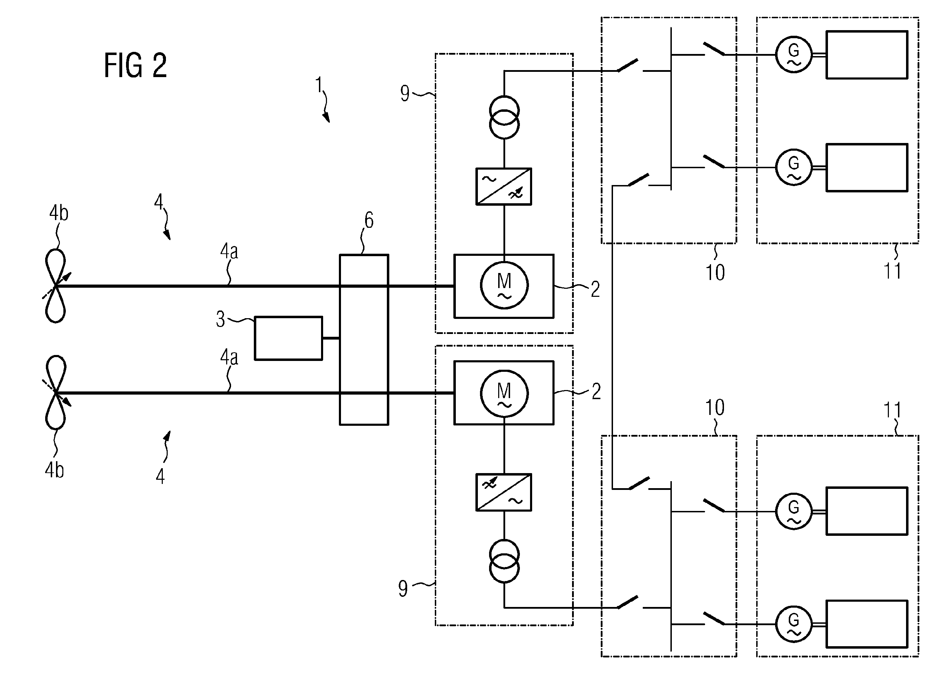

Ein in FIG 2 gezeigtes Hybridantriebssystem 1 für ein Zweiwellenschiff weist im Unterschied hierzu zwei elektrische Antriebssysteme 9 mit jeweils einem Elektromotor 2 auf, von denen jeder direkt, d.h. ohne ein zwischengeschaltetes Getriebe, jeweils eine Vortriebseinheit 4 antreibt. Die Gasturbine 3 ist mittels des Getriebes 6 mit beiden Propellerwellen 4a koppelbar. Zur Erhöhung der Ausfallsicherheit werden die beiden elektrischen Antriebssysteme 9 aus jeweils unterschiedlichen Energieverteilungsanlagen 10 und Energieerzeugungsanlagen 11 gespeist.

Sowohl im Fall des Hybridantriebssystems gemäß FIG 1 als auch im Fall des Hybridantriebssystems gemäß FIG 2 treiben die Antriebseinheiten 2, 3 je nach Anforderung, z.B. der Schiffsgeschwindigkeit, einzeln oder im Verbund die Vortriebseinheit(en) 4 an. Der (die) Elektromotor(en) 2 dienen dabei als Hauptantriebe zum Antrieb des (der) Vortriebseinheit(en) 4 für einen unteren Geschwindigkeitsbereich (z.B. bis einschließlich Marschfahrt) und die Gasturbine 3 alleine oder mit dem (den) Elektromotor(en) 2 als Hauptantrieb für einen höheren Geschwindigkeitsbereich (z.B. Geschwindigkeiten größer als Marschfahrt) bis hin zur Höchstgeschwindigkeit.

Jede der Antriebseinheiten 2, 3 kann hierbei eine maximale Leistung abgeben, die kleiner als die für den Vortrieb des Schiffes maximal benötigte Gesamtleistung ist.

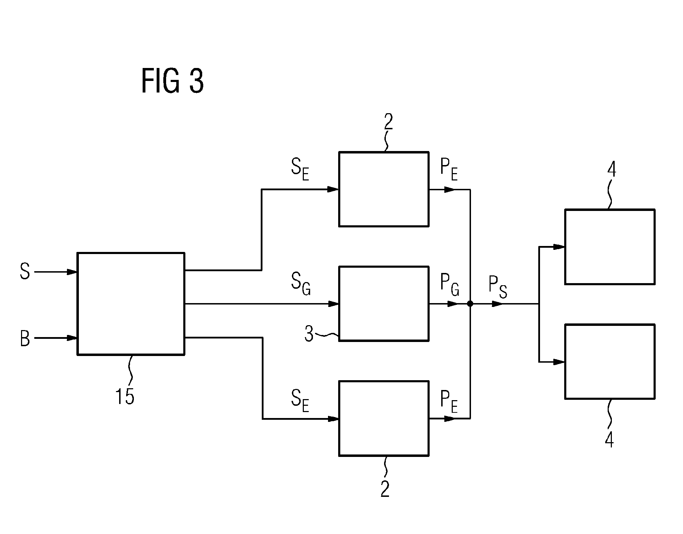

Wie in FIG 3 vereinfacht für den Fall des Hybridantriebssystems 1 gemäß FIG 2 dargestellt, werden die Elektromotoren 2 und die Gasturbine 3 von einer übergeordneten Steuereinrichtung 15 hinsichtlich ihrer jeweiligen Leistungsabgabe P_{E} bzw. P_{G} an die Vortriebseinheiten 4 in Abhängigkeit von einem vorgebaren Sollwert S, z.B. einem Sollwert für die Drehzahl des Propeller 4b oder für die Schiffsgeschwindigkeit, und einer vorgebbaren Betriebsart B derart gesteuert, dass durch die Summe dieser Leistungsabgaben eine von dem Sollwert S abhängige Gesamtleistung P_{S} an die Vortriebseinheiten 4 abgeben wird und dabei die Aufteilung dieser Gesamtleistungsabgabe auf die Leistungsabgaben P_{E} bzw. P_{G} der Elektromotoren 2 und der Gasturbine 3, d.h. die Höhe der von den drei Antriebseinheiten 2, 3 jeweils abzugebenden Teilleistungen P_{E} bzw. P_{G} zur Erzielung der Gesamtleistung P_{S} = P_{E} + P_{G} + P_{E}, in Abhängigkeit von dem Sollwert S und der vorgebbaren Betriebsart B erfolgt.

Die übergeordnete Steuereinrichtung 15 empfängt den Sollwert S von einem Sollwertgeber, beispielsweise einem Fahrhebel auf der Brücke oder von einem Autopilotsystem, und die Betriebsart B von einem Betriebsartengeber, z.B. einem Betriebsartenwahlschalter, der auf der Brücke angeordnet ist.

Zur Steuerung der Leistungsabgaben P_{E}, P_{G} der Antriebseinheiten 2, 3 in Abhängigkeit von einem vorgegebenen Sollwert S und einer vorgegebenen Betriebsart B übergibt die übergeordnete Steuereinrichtung 15 Sollwerte S_{E}, S_{G} (z.B. Sollwerte für die Drehzahl oder das Drehmoment) an nicht näher dargestellte Antriebssteuerungen der Antriebseinheiten 2, 3.

Über die Sollwerte S_{E}, S_{G} steuert die übergeordnete Steuereinrichtung 15 die Gesamtleistungsabgabe und die Aufteilung der abzugebenden Gesamtleistung auf die Elektromotoren 2 und die Gasturbine 3 und stellt automatisch für die vorgegebene Betriebsart B optimale Betriebspunkte ein.

Die vorgebbare Betriebart B kann hierbei eine Betriebsart sein, in der die Abgasemissionen und/oder Geräuschemissionen und/oder die Wärmeemissionen des Hybridantriebssystems 1, vorzugsweise einschließlich der Verbrennungskraftmaschinen 12 für die Erzeugung der elektrischen Energie für die Elektromotoren 2, minimal sind. Die vorgebbare Betriebart B kann auch eine Betriebsart sein, in der der Gesamttreibstoffverbrauch des Hybridantriebssystems 1, vorzugsweise einschließlich der Verbrennungskraftmaschinen 12 für die Erzeugung der elektrischen Energie für die Elektromotoren 2, minimal ist.

Die übergeordnete Steuereinrichtung 15 steuert hierbei die Gesamtleistungsabgabe P_{S} und/oder die Aufteilung der Gesamtleistungsabgabe P_{S} auf die einzelnen Antriebseinheiten 2, 3, zusätzlich unter Berücksichtigung von Grenzwerten für deren zeitliche Änderung und schützt somit Leistungskomponenten wie die Motoren 2 und Stromrichter 7 vor Überlastung.

Bei der Steuerung und Regelung der Leistungsabgaben der Antriebseinheiten 2, 3 werden hierbei durch Drehmomentschwankungen der Vortriebseinheiten 4 verursachte Welligkeiten in zu dem Sollwert korrespondierenden Istwerten, z.B. in von Drehzahlsensoren erfassten Istwerten für die Drehzahl der Propellerwellen 4a, unterdrückt.

Für die Steuerung der Gesamtleistungsabgabe und der Aufteilung der Gesamtleistungsabgabe P_{S} auf die einzelnen Antriebseinheiten 2, 3 sind in der übergeordneten Steuereinrichtung 15 Kennlinien und/oder Kenndaten abgespeichert, die den Zusammenhang zwischen dem Sollwert S, z.B. der Propellerdrehzahl oder der Schiffsgeschwindigkeit, der jeweiligen Leistungsabgabe und von die jeweilige Betriebsart charakterisierenden Betriebsparametern wie z.B. dem Treibstoffverbrauch, den Geräuschemissionen, den Abgasemissionen, den Wärmeemissionen, Wärmeverluste im Rotorsystemen bei Maschinen mit supraleitenden Rotorwicklungen etc. beschreibt. Weiterhin beschreiben die Kennlinien die maximal mögliche Leistungsabgabe.

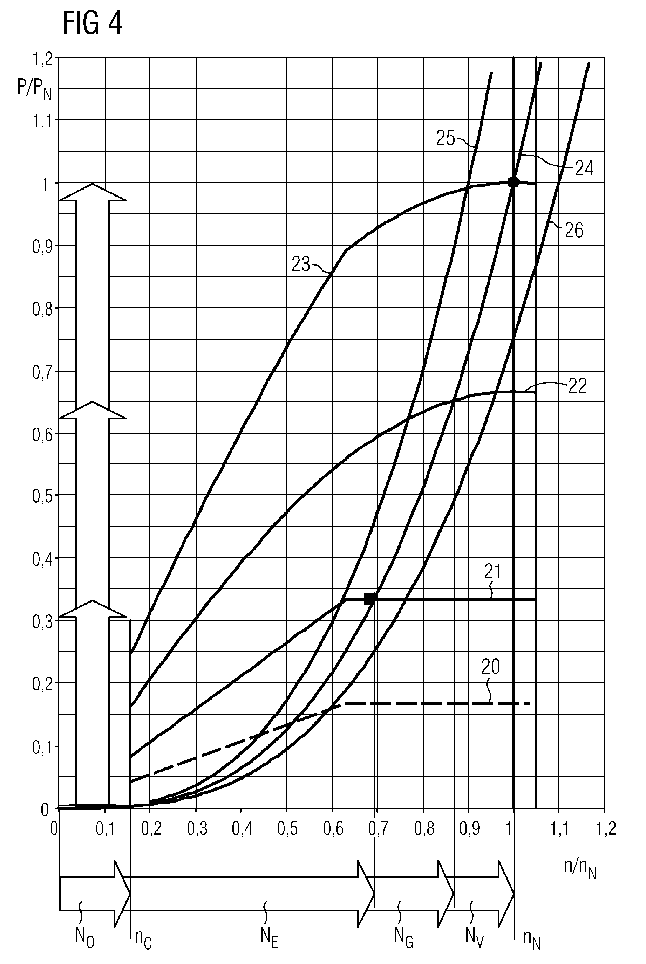

FIG 4 zeigt beispielhaft, wie in der übergeordneten Steuereinrichtung 15 anhand von Kennlinien die Gesamtleistungsabgabe und die Aufteilung der Gesamtleistungsabgabe auf die Leistungsabgaben P_{E}, P_{G} der einzelnen Antriebseinheiten 2, 3 für einen verbrauchsoptimierte Betrieb in Abhängigkeit von einem Sollwert S für die Propellerdrehzahl n ermittelt wird.

Hierbei wird davon ausgegangen, dass die von einer der Antriebseinheiten 2, 3 maximal abgebare Leistung kleiner als die für den Vortrieb des Schiffes maximal benötigte Gesamtleistung ist, wobei jedoch die Summe der maximal abgebaren Leistungen der einzelnen Antriebseinheiten 2, 3 der maximal für den Vortrieb des Schiffes benötigten Gesamtleistung entspricht.

Die in FIG 4 dargestellten Kennlinien 20, 21, 22, 23 (sogenannte "Grenzkennlinien") beschreiben die jeweils maximal abgebbare Leistung P (bezogen auf die durch den Antriebsverbund insgesamt maximal abgebbare Leistung P_{N}) über der Propellerdrehzahl n (bezogen auf die maximale Drehzahl n_{N}) für jede der Antriebseinheiten 2, 3 und für einen Verbund dieser Antriebseinheiten 2, 3. Eine erste Kennlinie 20 gibt die maximale Leistung eines einzelnen E-Motors 2, eine zweite Kennlinie 21 die maximale Leistung des Verbundes beider E-Motoren 2, eine dritte Kennlinie 22 die maximale Leistung der Gasturbine 3 und eine vierte Kennlinie 24 die maximale Leistung des Verbundes beider E-Motoren 2 und der Gasturbine 3 über der Drehzahl n an.

In den Antriebssteuerungen der Antriebseinheiten 2, 3 ist die für die jeweilige Antriebseinheit relevante Grenzkennlinie hinterlegt, d.h. die Grenzkennlinie 20 in den Antriebssteuerungen der Elektromotoren 2 und die Grenzkennlinie 22 in den Antriebssteuerungen der Gasturbine 3.

Die Kennlinien 21 für den Verbund zweier Antriebseinheiten 2 und die Kennlinie 23 für den Verbund zweier Antriebseinheiten 2 und einer Antriebseinheit 3 sind dagegen in der übergeordneten Steuereinrichtung 15 hinterlegt. Die übergeordnete Steuereinrichtung 15 kann aber auch auf die in den Antriebssteuerungen hinterlegten Grenzkennlinien zugreifen.

Die Elektromotoren 2 können unterhalb ihrer Grenzkennlinie 20 in einem Drehzahlbereich von Null bis zur maximalen Drehzahl n_{N} der Propellerwellen 4 stufenlos Drehmoment abgeben.

Eine erste Propellerkennlinie 24 beschreibt das Leistungsaufnahmeverhalten für stationäre Betriebspunkte unter normalen Dienstbedingungen. Eine zweite Propellerkennlinie 25 zeigt demgegenüber das Leistungsaufnahmeverhalten für stationäre Betriebspunkte unter erschwerten Dienstbedingungen, bei erhöhtem Schiffswiderstand (z.B. durch Seegang oder Bewuchs) usw. und eine dritte Propellerkennlinie 26 das Leistungsaufnahmeverhalten für stationäre Betriebspunkte unter leichten Dienstbedingungen, bei verringertem Schiffswiderstand durch Glattwasser, bei geringem Schiffswiderstand (z.B. bei einem neuen Schiff) usw.

Nach dem Start der Elektromotoren 2 und Freigabe des Drehzahlsollwertes wird die Drehzahl der Elektromotoren 2 sofort von Null auf eine minimale Drehzahl n₀ (z.B. 30 rpm) gesetzt, um eine ausreichende Schmierung der Wellenlager sicherzustellen. Bei dem Drehzahlbereich N₀ handelt es sich somit im Grunde um keinen Betriebsbereich.

Wird der Steuereinrichtung 15 bei normalen Dienstbedingungen (Propellerkennlinie 24) und bei Wahl einer Betriebsart "geringster Treibstoffverbrauch" ein Drehzahlsollwert aus dem Drehzahlbereich N_{E} vorgegeben, so weisen die Elektromotoren 2 einen geringeren spezifischen Verbrauch als die Gasturbine 3 auf. In diesem Drehzahlbereich N_{E} wird die Leistungsaufteilung auf die Antriebseinheiten 2, 3 deshalb derart gesteuert, dass nur die Elektromotoren 2 Leistung an die Vortriebseinheiten 4 abgegeben.

Die benötigte Gesamtleistung kann hierbei zu je 50 % von beiden Elektromotoren 2 geliefert und an die jeweilige Propellerwelle 4a abgegeben werden. Beide E-Motoren 2 sind dann mit den Propellerwellen 4a gekuppelt. Die Gasturbine 3 und das Getriebe 6 sind dagegen von den Propellerwellen 4a abgekuppelt. Von der übergeordneten Steuereinrichtung 15 wird der vorgegebene Drehzahlsollwert an die Antriebssteuerungen der Elektromotoren 2 weitergegeben. Die Leistung der Elektromotoren 2 wird daraufhin von deren Antriebssteuerungen entlang einer in den Antriebssteuerungen hinterlegten Hochlaufkurve so weit erhöht, bis die Propellerwellen 4a den vorgegebenen Drehzahlsollwert erreicht haben. Die Drehzahl der Propellerwellen 4a wird somit von den Elektromotoren 2 geführt.

Wird das Ende des Drehzahlbereiches N_{E} erreicht, weil nun ein Drehzahlsollwert S aus dem Drehzahlbereich N_{G} für Gasturbinenbetrieb vorgegeben wird oder weil die Elektromotoren 2 (z.B. aufgrund schwerer See, siehe Propellerkurve 25) den Drehzahlsollwert nicht erreichen, so muss Leistung von der Gasturbine 3 erbracht werden. Es werden deshalb die Gasturbine 3 und die zugehörigen Hilfsaggregate gestartet. Dies kann entweder automatisch durch die übergeordnete Steuereinrichtung 15 oder erst nach einer Anfrage der übergeordneten Steuereinrichtung 15 an die Brücke, ob Gasturbinenbetrieb gewünscht ist, und ausdrücklicher Bestätigung durch die Brücke, erfolgen.

Von der übergeordneten Steuereinrichtung 15 wird dann ein entsprechender Drehzahlsollwert an die Antriebssteuerung der Gasturbine 3 gegeben, woraufhin die Drehzahl der Gasturbine 3 hochläuft. Sobald die Drehzahl der Gasturbine 3 bzw. des Getriebes 6 größer als die Drehzahl der Propellerwellen 4a ist, wird das Getriebe 6 mit den Propellerwellen 4a gekuppelt und von der übergeordneten Steuereinrichtung 15 die Drehzahlsollwertführung von den Elektromotoren 2 auf die Gasturbine 3 geschaltet. Der Drehzahlsollwert steht dabei im Drehzahlbereich N_{G}.

Nun greift die Leistungsregelung der Antriebssteuerung der Gasturbine 3 und die Gasturbine 3 gibt ihre Leistung an die Propellerwellen 4a ab, gleichzeitig werden die Elektromotoren 2 von Drehzahlregelung auf Drehmomentenregelung umgeschaltet. Aufgrund der Stellung des Drehzahlsollwertes im Drehzahlbereich N_{G} wird dabei der Drehmomenten- bzw. Stromsollwert für die Elektromotoren 2 auf Null gesetzt und somit deren Leistung zurückgenommen. Wenn der Stromsollwert der Elektromotoren 2 Null erreicht hat, werden nach einer vorgewählten Zeit die Elektromotoren 2 von den Propellerwellen 4a abgekuppelt. Die Drehzahl der Propellerwellen 4a wird nun von der Antriebssteuerung der Gasturbine 3 entlang einer Hochlaufkurve auf den gewünschten Sollwert geführt. Die Drehzahl der Propellerwellen 4a wird somit von der Gasturbine 3 geführt.

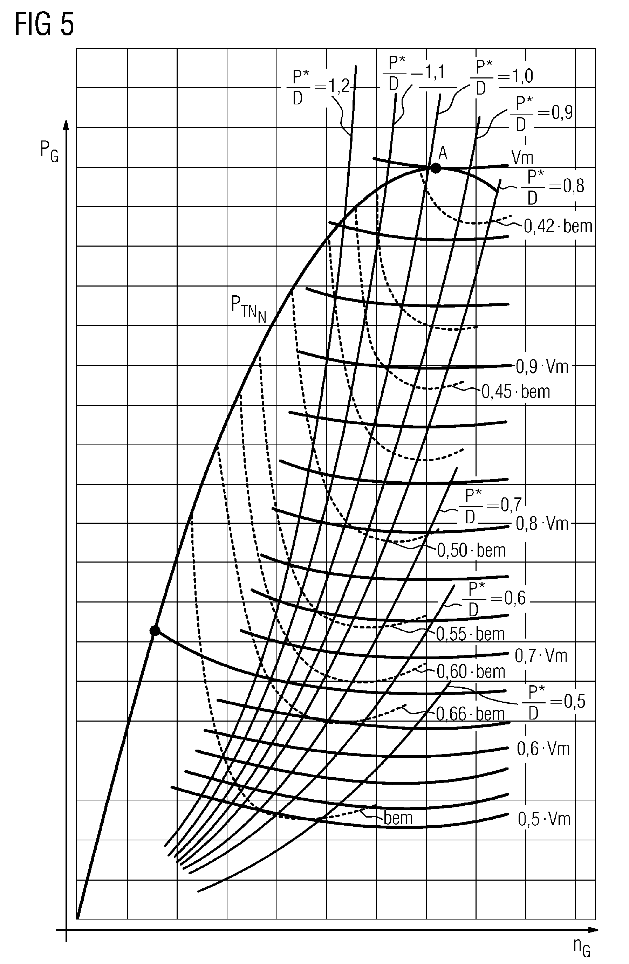

Die Gasturbine 3 wird hierbei, beispielsweise anhand eines in FIG 5 gezeigten und dem Fachmann geläufigen Kennlinienfeldes, im Zusammenspiel mit den Verstellpropellern 4b nach Möglichkeit immer mit besten Wirkungsgrad und somit im Optimum des spezifischen Verbrauches betrieben. Dabei bezeichnet n_{G} die Drehzahl der Gasturbine, P_{G} die Leistung der Gasturbine, P*/D das Steigungsverhältnis des Verstellpropellers, vm die maximale Schiffsgeschwindigkeit, bₑₘ den maximalen spezifischen Brennstoffverbrauch in kg/(kW*h)und P_{TNN} die Norm- oder Nutzleistung der Gasturbine.

Wird das Ende des Drehzahlbereiches N_{G} erreicht, weil nun ein Drehzahlsollwert aus dem Drehzahlbereich N_{V} für Verbundbetrieb vorgegeben wird oder weil die Gasturbine 3 (z.B. aufgrund schwerer See, siehe Propellerkurve 25) den vorgegebenen Drehzahlsollwert nicht erreicht, so muss zusätzlich Leistung von den Elektromotoren 2 an die Vortriebseinheiten 4 abgegeben werden und die Elektromotoren 2 werden gestartet. Dies kann entweder automatisch durch die übergeordnete Steuereinrichtung 15 oder erst nach einer Anfrage der übergeordneten Steuereinrichtung 15 an die Brücke, ob Verbundbetrieb gewünscht ist, und ausdrücklicher Bestätigung durch die Brücke, erfolgen.

Die Elektromotoren 2 werden hierzu in den Bereich der Propellerwellendrehzahl gefahren und dann mit der jeweiligen Propellerwelle 4a gekuppelt. Danach wird entsprechend des Drehzahlsollwertes S die Drehmomentenregelung der E-Motoren 2 freigeben und der Strom der E-Motoren 2 soweit erhöht, bis die Drehzahl den Drehzahlsollwert S erreicht.

Im Verbundbetrieb der Elektromotoren 2 mit der Gasturbine 3 übernimmt somit die Gasturbine 3 die Drehzahlführung der Vortriebseinheiten 4. Die Elektromotoren werden in ihrer Drehzahl von den Vortriebseinheiten 4 bzw. von der Gasturbine 3 geführt und geben, bestimmt durch die Sollwertvorgabe, ein derartiges Drehmoment an die Vortriebseinheiten 4 ab, dass sich die von der Gasturbine 3 und dem Elektromotor 2 jeweils abgegebenen Leistungen in den Vortriebseinheiten 4 summieren.

Die Leistungsaufteilung zwischen der Gasturbine 3 und den Elektromotoren 2 wird dabei durch die übergeordnete Steuereinrichtung 15 in Abhängigkeit von dem Sollwert S und der vorgegebenen Betriebsart B gesteuert.

Bei verbrauchsoptimierter Betriebsart wird die Gasturbine 3 im Drehzahlbereich N_{V} für Verbundbetrieb beispielsweise immer im Optimum ihres spezifischen Verbrauches gefahren. Die Elektromotoren 2 liefern nur die Differenzleistung, die zur Erreichung des Drehzahlsollwertes S erforderlich ist.

Bei beschleunigungsoptimiertem Betrieb steuert die Steuereinrichtung 15 die Leistungsaufteilung zusätzlich in Abhängigkeit von der zeitlichen Änderung des Sollwertes. Wenn beispielsweise bei einer sehr kleinen Drehzahl im Drehzahlbereich N_{E} für E-Motorbetrieb ein Drehzahlsollwert aus dem Drehzahlbereich N_{V} vorgegeben wird, wird die Gasturbine 3 bereits im Drehzahlbereich N_{E} auf die Propellerwellen 4a zugeschaltet.

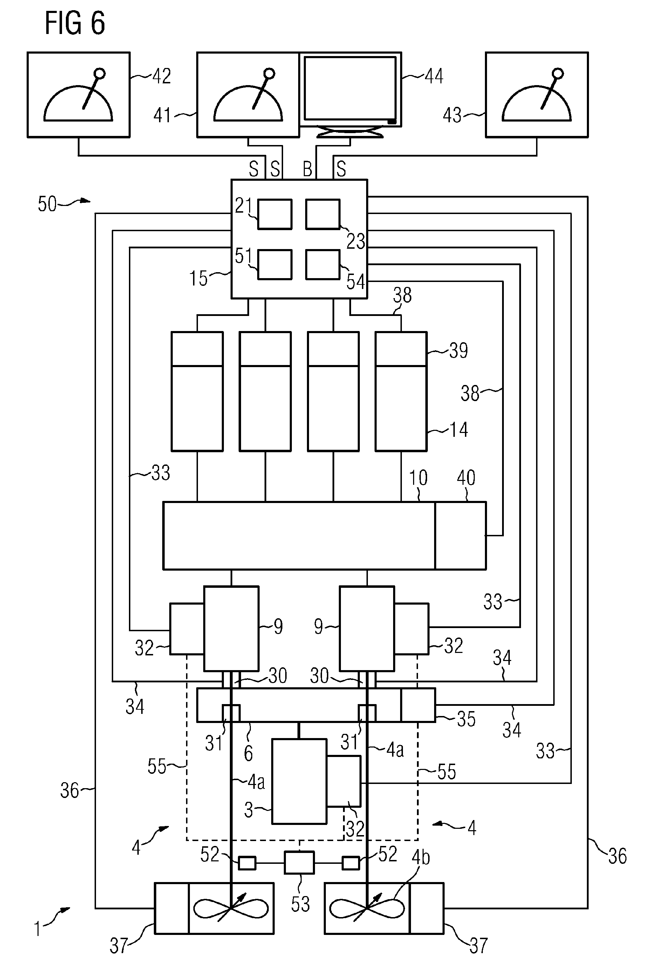

FIG 6 zeigt ein Hybridantriebssystem 1 für ein Zweiwellenschiff mit einer für die Durchführung des vorstehend erläuterten Verfahrens besonders geeigneten Vorrichtung 50. Das Hybridantriebssystem 1 weist zwei elektrische Antriebssysteme 9 und eine Gasturbine 3 als Antriebseinheiten zum Antrieb zweier Vortriebseinheiten 4 bestehend aus jeweils einer Propellerwelle 4a und einem Verstellpropeller 4b auf. Die Vortriebseinheiten 4 sind hierbei durch die Antriebseinheiten 2, 3 einzeln und im Verbund antreibbar. Die Propellerwellen 4a sind hierzu an ihrem dem Propeller 5 abgewandten Ende ohne ein zwischengeschaltetes Getriebe mittels einer Schaltkupplung 30 mit jeweils einem elektrische Antriebssystem 9 kuppelbar. Die Gasturbine 3 ist mittels eines Getriebes 6 und Schnellkupplungen 31 mit den Propellerwellen 4a kuppelbar. Über das Getriebe 6 ist auch eine Kraftübertragung von nur einem elektrischen Antriebssystem 9 an beide Propellerwellen 4a möglich. Jedes der elektrischen Antriebssysteme 9 besteht aus einem Elektromotor, einem Stromrichter und einen Stromrichtertransformator (siehe FIG 1 und 2) und wird über eine Energieverteilungsanlage 10 mit elektrischer Energie versorgt, die von Dieselgeneratorsätzen 14 erzeugt wird.

Die Vorrichtung 50 umfasst einen im Brückenfahrstand installierter Maschinentelegrafen bzw. Fahrhebel 41 oder ein Autopilotsystem als Sollwertgeber für einen Sollwert S für die Drehzahl der Vortriebseinheiten 4. Alternativ kann der Sollwert auch durch Maschinentelegrafen oder Fahrhebel 42 in weiteren Fahrständen, wie z.B. im Maschinenleitstand, oder einen Nottelegrafen 43 vorgegeben werden.

Die Vorrichtung 50 umfasst weiterhin einen im Brückenfahrstand installierten Betriebsartenwahlschalter 44 zur Vorgabe einer gewünschten Betriebsart B durch die Schiffsbesatzung. Der Betriebsartenwahlschalter 44 ist hierbei in Form eines Auswahlfeldes auf einer auf einem Monitor angezeigten Bedien-Oberfläche realisiert.

Weiterhin umfasst die Vorrichtung 50 eine Steuereinrichtung 15, die dazu eingerichtet ist, die Antriebseinheiten 2, 3 hinsichtlich ihrer jeweiligen Leistungsabgabe an die Vortriebseinheiten 4 derart zu steuern, dass durch die Summe dieser Leistungsabgaben eine von dem Sollwert S abhängige Gesamtleistung an die Vortriebseinheiten 4 abgebbar ist, wobei die Aufteilung dieser Gesamtleistungsabgabe auf die Leistungsabgaben der einzelnen Antriebseinheiten 2, 3 in Abhängigkeit von dem Sollwert S und der vorgegebenen Betriebsart B erfolgt. Hierzu sind in der Steuereinrichtung 15 die Kennlinien 21, 23 für den Verbund der Antriebseinheiten 2, 3 gespeichert

Die Vorrichtung 50 umfasst weiterhin den einzelnen Antriebseinheiten 2, 3 zugeordnete Antriebssteuerungen 32 zu Steuerung und Regelung derer jeweiligen Leistungsabgabe, wobei die Steuereinrichtung 15 die Leistungsabgabe der Antriebseinheiten 2, 3 durch eine Vorgabe von Drehzahlsollwerten oder Drehmomentsollwerten an die Antriebssteuerungen 32 steuert. Diese Sollwerte werden den Antriebssteuerungen 32 von der Steuereinrichtung 15 über Steuerleitungen 33 zugeführt.

Die übergeordnete Steuereinrichtung 15 ist außerdem über Steuerleitungen 34 mit einem Getriebesteuersystem 35 und mit nicht näher dargestellten Steuereinrichtungen für die Kupplungen 30, 31 verbunden. Hierdurch sind durch die übergeordnete Steuereinrichtung 15 die Getriebestellungen (einschließlich der zugehörigen Hilfsaggregate) sowie die Kupplungsstellungen steuerbar und somit die einzelnen Antriebseinheiten 2, 3 den Propellerwellen 4a gezielt zu- und wegschaltbar.

Zur Steuerung des Stellwinkels der Verstellpropeller 4b ist die übergeordnete Steuereinrichtung 15 über Steuerleitungen 36 mit Steuersystemen 37 für die Verstellpropeller 4b verbunden.

Weiterhin ist die übergeordnete Steuereinrichtung 15 zur Steuerung der elektrischen Energieerzeugung und -verteilung über Steuerleitungen 38 mit Steuersystemen 39, 40 der Energieerzeugeraggregate 14 und der Energieverteilungsanlage 10 verbunden.

Die Steuereinrichtung 15 umfasst Begrenzungsmittel 51 zur Begrenzung von zeitlichen Änderungen der Gesamtleistungsabgabe und/oder der Aufteilung der Gesamtleistungsabgabe auf die einzelnen Antriebseinheiten. Die Begrenzungsmittel 51 können hierbei in Hard- und/oder Software realisiert sein.

Für die Steuerung der Leistungsabgaben der Antriebseinheiten 2, 3 durch die Antriebssteuerungen 32 umfasst die Vorrichtung 50 außerdem Sensoren 52 zur Erfassung von Istwerten für die Drehzahlen der Propellerwellen 4a sowie Filtermittel 53 zur Unterdrückung von durch Drehmomentschwankungen der Vortriebseinheiten 4 verursachten Welligkeiten in den Istwerten. Die Filtermittel 53 können hierbei in Hard- und/oder Software realisiert sein.

Für die Steuerung der Gesamtleistungsabgabe auf die einzelnen Antriebseinheiten 2, 3 in Abhängigkeit von der zeitlichen Änderung des Sollwertes S, z.B. bei einer schnellen Änderung des Sollwertes vom Drehzahlbereich N_{E} für Elektromotorbetrieb in den Drehzahlbereich N_{V} für Verbundbetrieb, weist die Steuereinrichtung 15 Hochlaufsteuermittel 54 auf, die in Software und/oder Hardware realisiert sein können.

Die Leitungen 33, 34, 36, 38 und/oder 55 müssen hierbei nicht als diskrete Leitungen ausgebildet sein sondern können auch in Form eines Kommunikationsbusses realisiert sein.

Bevorzugt ist die übergeordnete Steuereinrichtung 15 redundant vorhanden, insbesondere zumindest einmal auf der Brücke und einmal in einem Notsteuerstand, z.B. im Heck des Schiffes, da die Steuereinrichtung 15 den wesentlichen Teil der Antriebssteuerung des Schiffes darstellt und somit immer verfügbar sein muss.

## Patentansprüche

1. Verfahren zum Betrieb eines Hybridantriebsystems (1) eines Schiffes, insbesondere eines Navy-Schiffes, mit zumindest einem Elektromotor (2) und zumindest einer Verbrennungskraftmaschine (3), insbesondere einer Gasturbine, als Antriebseinheiten, die je nach Anforderung, z.B. der Schiffsgeschwindigkeit, einzeln oder im Verbund zumindest eine Vortriebseinheit (4), z.B. einen Propeller (4b), des Schiffes antreiben, wobei die Antriebseinheiten (2, 3) hinsichtlich ihrer jeweiligen Leistungsabgabe (P_{E} bzw. P_{G}) an die zumindest eine Vortriebseinheit (4) von einer Steuereinrichtung (15) in Abhängigkeit von einem vorgebbaren Sollwert (S), z.B. einem Sollwert für die Propeller-Drehzahl oder die Schiffsgeschwindigkeit, und einer vorgebbaren Betriebsart (B) derart gesteuert werden, dass durch die Summe dieser Leistungsabgaben (P_{E} bzw. P_{G}) eine von dem Sollwert (S) abhängige Gesamtleistung (P_{S}) an die zumindest eine Vortriebseinheit (4) abgegeben wird, wobei die Aufteilung dieser Gesamtleistungsabgabe auf die Leistungsabgaben (P_{E} bzw. P_{G}) der einzelnen Antriebseinheiten (2, 3) in Abhängigkeit von dem Sollwert (S) und der Betriebsart (B) erfolgt,
**dadurch gekennzeichnet, dass** die Gesamtleistungsabgabe und/oder die Aufteilung der Gesamtleistungsabgabe auf die einzelnen Antriebseinheiten (2, 3) unter Berücksichtigung von Grenzwerten für deren zeitliche Änderung gesteuert wird, und/oder dass die Aufteilung der Gesamtleistungsabgabe zusätzlich in Abhängigkeit von einer zeitlichen Änderung des Sollwertes (S) gesteuert wird.

2. Verfahren nach Anspruch 1,
**dadurch gekennzeichnet, dass** während des Betriebs des Hybridantriebssystems (1) die zumindest eine oder jede Vortriebseinheit (4) mit jeweils zumindest zwei Antriebseinheiten 2, 3), vorzugsweise mit jeweils zumindest einem Elektromotor und zumindest einer Verbrennungskraftmaschine, mechanisch fest gekoppelt ist oder zumindest koppelbar ist.

3. Verfahren nach Anspruch 1 oder 2,
**dadurch gekennzeichnet, dass** während des Betriebs des Hybridantriebssystems (1) bedarfsabhängig die zumindest eine Verbrennungskraftmaschine (2), vorzugsweise auch der zumindest eine Elektromotor (3), mit der anzutreibenden Vortriebseinheit (4) mechanisch gekoppelt und von ihr entkoppelt wird.

4. Verfahren nach einem der vorhergehenden Ansprüche,
**dadurch gekennzeichnet, dass** über die Steuerung der Leistungsaufteilung auch eine Steuerung des Zu- oder Abschaltens der Antriebseinheiten (2, 3) zu bzw. von der zumindest einen Vortriebseinheit (4), vorzugsweise einschließlich eines mechanischen Koppelns oder Entkoppelns von Antriebseinheiten (2, 3), insbesondere der zumindest einen Verbrennungskraftmaschine, mit bzw. von der zumindest einen Vortriebseinheit (4), erfolgt.

5. Verfahren nach einem der vorhergehenden Ansprüche ,
**dadurch gekennzeichnet, dass** die vorgebbare Betriebart (B) eine Betriebsart ist, in der die Abgasemissionen und/oder Geräuschemissionen und/oder die Wärmeemissionen des Hybridantriebssystems (1), vorzugsweise einschließlich von Verbrennungskraftmaschinen (12) für die Erzeugung der elektrischen Energie für den zumindest einen Elektromotor (2), minimal sind.

6. Verfahren nach einem der Ansprüche 1 bis 4,
**dadurch gekennzeichnet, dass** die vorgebbare Betriebsart (B) eine Betriebsart ist, in der der Gesamttreibstoffverbrauch des Hybridantriebssystems (1), vorzugsweise einschließlich von Verbrennungskraftmaschinen (12) für die Erzeugung der elektrischen Energie für den zumindest einen Elektromotor (2), minimal ist.

7. Verfahren nach einem der vorhergehenden Ansprüche,
**dadurch gekennzeichnet, dass** die Gesamtleistungsabgabe und die Aufteilung der Gesamtleistungsabgabe auf die Antriebseinheiten (2, 3) anhand von Kenndaten und/oder von Kennlinien (21, 23) des Verbundes der Antriebseinheiten (2, 3) gesteuert wird.

8. Verfahren nach Anspruch 7,
**dadurch gekennzeichnet, dass** in der Steuereinrichtung (15) für unterschiedliche Betriebsarten jeweils unterschiedliche Kenndaten und/oder Kennlinien (21, 23) gespeichert sind, wobei die für die Steuerung der Leistungsaufteilung bei einer vorgebbaren Betriebsart relevanten Kenndaten und/oder Kennlinien (21, 23) in Abhängigkeit von der vorgebbaren Betriebsart (B) ausgewählt werden.

9. Verfahren nach einem der vorhergehenden Ansprüche,
**dadurch gekennzeichnet, dass** der Sollwert (S) von einem manuell bedienbaren Fahrhebel (41) oder einem Autopilotsystem vorgegeben wird.

10. Verfahren nach einem der vorhergehenden Ansprüche,
**dadurch gekennzeichnet, dass** eine Zuschaltung oder Abschaltung einer Leistungsabgabe einer Antriebseinheit (2, 3) an bzw. von einer Vortriebseinheit (4) ohne Momentenstöße erfolgt.

11. Verfahren nach einem der vorhergehenden Ansprüche,
**dadurch gekennzeichnet, dass** jede der Antriebseinheiten (2, 3) eine maximale Leistung abgegeben kann, die kleiner als die für den Vortrieb des Schiffes maximal benötigte Gesamtleistung ist.

12. Verfahren nach einem der vorhergehenden Ansprüche,
**dadurch gekennzeichnet, dass** der zumindest eine Elektromotor (2) unterhalb seiner Grenzkennlinie (20) in einem Drehzahlbereich von Null bis zur maximalen Drehzahl (nmax) der Vortriebseinheit(en) (4) stufenlos Drehmoment abgeben kann.

13. Verfahren nach einem der vorhergehenden Ansprüche,
**dadurch gekennzeichnet, dass** bei der Steuerung der Leistungsabgaben (P_{E}, P_{G}) der Antriebseinheiten (2, 3) durch Drehmomentschwankungen der Vortriebseinheiten (4) verursachte Welligkeiten in zu dem Sollwert (S) korrespondierenden Istwerten (I), z.B. in von Drehzahlsensoren erfassten Istwerten für die Drehzahl einer Propellerwelle, unterdrückt werden.

14. Verfahren nach einem der vorhergehenden Ansprüche,
**dadurch gekennzeichnet, dass** der zumindest eine Elektromotor (2) als Hauptantrieb zum Antrieb des Schiffes für einen unteren Geschwindigkeitsbereich des Schiffes und die zumindest eine Verbrennungskraftmaschine (3) alleine oder im Verbund mit dem zumindest einen Elektromotor (2) als Hauptantrieb für einen höheren Geschwindigkeitsbereich des Schiffes bis zur Höchstgeschwindigkeit verwendet wird.

15. Verfahren nach einem der vorhergehenden Ansprüche,
**dadurch gekennzeichnet, dass** in dem unteren Geschwindigkeitsbereich der zumindest Elektromotor (2) die Drehzahlführung der Vortriebseinheit(en) (4) übernimmt und in dem höheren Geschwindigkeitsbereich die zumindest eine Verbrennungskraftmaschine (3) die Drehzahlführung der Vortriebseinheit(en) (4) übernimmt, wobei im Verbundbetrieb des zumindest einen Elektromotors (2) mit der zumindest einen Verbrennungskraftmaschine (3) die Verbrennungskraftmaschine (3) die Drehzahlführung der Vortriebseinheit(en) (4) übernimmt und der Elektromotor (2) in seiner Drehzahl von der Vortriebseinheit (4) bzw. von der Verbrennungskraftmaschine (3) geführt wird und bestimmt durch die Sollwertvorgabe ein derartiges Drehmoment an die Vortriebseinheit(en) abgibt, dass sich die von der Verbrennungskraftmaschine (3) und dem Elektromotor (2) jeweils abgegebenen Drehmomente in der (den) Vortriebseinheit(en) (4) summieren.

16. Verfahren nach einem der vorhergehenden Ansprüche,
**dadurch gekennzeichnet, dass** es bei einem Hybridantriebssystem (1) angewendet wird, das genau zwei Elektromotoren (2) und genau eine Gasturbine (3) als Antriebseinheiten und genau zwei Propellerwellen (4a) mit jeweils einem Propeller (4b) als Vortriebseinheiten (4) aufweist, wobei die Propellerwellen (4a) durch ein Getriebe (6) geführt sind, über das die Propellerwellen (4a) mit der Gasturbine (3) gekoppelt werden können, und wobei jede der Propellerwellen (4a) an ihrem dem Propeller (4b) abgewandten Ende ohne ein zwischengeschaltetes Getriebe mit jeweils einem der Elektromotoren (2) gekoppelt werden kann.

17. Vorrichtung (50) zur Durchführung des Verfahrens nach einem der vorhergehenden Ansprüche bei einem Hybridantriebssystems (1) eines Schiffes, insbesondere eines Navy-Schiffes, mit zumindest einem Elektromotor (2) und zumindest einer Verbrennungskraftmaschine (3), insbesondere einer Gasturbine, als Antriebseinheiten, die je nach Anforderung, z.B. der Schiffsgeschwindigkeit, einzeln oder im Verbund zumindest eine Vortriebseinheit (4), z.B. einen Propeller (4b), des Schiffes antreiben, wobei die Vorrichtung (50) einen Sollwertgeber (41) zur Vorgabe eines Sollwertes (S), z.B. eines Sollwertes für die Drehzahl eines Propellers (4b) oder für die Schiffsgeschwindigkeit, einen Betriebsartengeber (44) zur Vorgabe einer Betriebsart (B) und eine Steuereinrichtung (15), die dazu eingerichtet ist, die Antriebseinheiten (2, 3) hinsichtlich ihrer jeweiligen Leistungsabgabe (P_{E} bzw. P_{G}) an die zumindest eine Vortriebseinheit (4) derart zu steuern, dass durch die Summe dieser Leistungsabgaben (P_{E} bzw. P_{G}) eine von dem Sollwert (S) abhängige Gesamtleistung (P_{S}) an die zumindest eine Vortriebseinheit (4) abgebbar ist und dabei die Aufteilung dieser Gesamtleistungsabgabe auf die Leistungsabgaben (P_{E} bzw. P_{G}) der einzelnen Antriebseinheiten (2, 3) in Abhängigkeit von dem Sollwert (S) und der Betriebsart (B) erfolgt, umfasst,
**dadurch gekennzeichnet, dass** die Steuereinrichtung (15) Begrenzungsmittel (51) zur Begrenzung von zeitlichen Änderungen der Gesamtleistungsabgabe und/oder der Aufteilung der Gesamtleistungsabgabe auf die einzelnen Antriebseinheiten (2, 3) umfasst, und/oder dass die Steuereinrichtung (15) die Aufteilung der Gesamtleistungsabgabe auf die einzelnen Antriebseinheiten (2, 3) zusätzlich in Abhängigkeit von der zeitlichen Änderung des Sollwertes (S) steuert.

18. Vorrichtung (50) nach Anspruch 17,
**dadurch gekennzeichnet, dass** während des Betriebs des Hybridantriebssystems (1) die zumindest eine oder jede Vortriebseinheit (4) mit jeweils zumindest zwei Antriebseinheiten (2, 3), vorzugsweise mit jeweils zumindest einem Elektromotor und zumindest einer Verbrennungskraftmaschine, mechanisch fest gekoppelt oder koppelbar ist.

19. Vorrichtung nach Anspruch 17 oder 18,
**dadurch gekennzeichnet, dass** die zumindest eine Verbrennungskraftmaschine (2), vorzugsweise auch der zumindest eine Elektromotor (3), während des Betriebs des Hybridantriebssystems (1) bedarfsabhängig mit der anzutreibenden Vortriebseinheit (4) mechanisch koppelbar und von ihr entkoppelbar ist bzw. sind.

20. Vorrichtung nach einem der Ansprüche 17 bis 19,
**dadurch gekennzeichnet, dass** die Steuereinrichtung (15) dazu eingerichtet ist, über die Steuerung der Leistungsaufteilung auch das Zu- oder Abschalten der Antriebseinheiten (2, 3) zu bzw. von der zumindest einen Vortriebseinheit (4), vorzugsweise einschließlich eines mechanischen Koppelns oder Entkoppelns von Antriebseinheiten (2, 3), insbesondere der zumindest einen Verbrennungskraftmaschine, mit bzw. von der zumindest einen Vortriebseinheit (4), zu steuern.

21. Vorrichtung (50) nach einem der Ansprüche 17 bis 20,
**dadurch gekennzeichnet, dass** der Sollwertgeber ein manuell bedienbarer Fahrhebel (41) oder ein Autopilotsystem ist.

22. Vorrichtung (50) nach einem der Ansprüche 17 bis 21,
**gekennzeichnet durch** den einzelnen Antriebseinheiten (2, 3) zugeordnete Antriebssteuerungen (32) zur Steuerung derer jeweiligen Leistungsabgabe (P_{E} bzw. P_{G}), wobei die Steuereinrichtung (15) die Leistungsabgabe (P_{E} bzw. P_{G}) der Antriebseinheiten (2, 3) **durch** Vorgabe von Drehzahlsollwerten oder Drehmomentsollwerten an die Antriebssteuerungen (32) steuert.

23. Vorrichtung (50) nach einem der Ansprüche 17 bis 22,
**dadurch gekennzeichnet, dass** in der Steuereinrichtung (15) Kenndaten und/oder Kennlinien (21, 23) des Verbundes der Antriebseinheiten (2, 3) zur Steuerung der Gesamtleistungsabgabe und/oder der Aufteilung der Gesamtleistungsabgabe auf die Leistungsabgaben (P_{E}, P_{G}) der einzelnen Antriebseinheiten (2, 3) abgespeichert sind.

24. Vorrichtung (50) nach einem der Ansprüche 17 bis 23,
**dadurch gekennzeichnet, dass** sie für die Steuerung der Leistungsabgabe (P_{E} bzw. P_{G}) der Antriebseinheiten (2, 3) Sensoren (52) zur Erfassung zumindest eines zu dem zumindest einen Sollwert (S) korrespondieren Istwertes (I), z.B. eines Istwertes für die Drehzahl einer Propellerwelle, und Filtermittel (53) zur Unterdrückung von durch Drehmomentschwankungen der Vortriebseinheiten (4) verursachte Welligkeiten in den Istwerten (I) umfasst.

25. Vorrichtung (50) nach einem der Ansprüche 17 bis 24, **dadurch gekennzeichnet, dass** die Steuereinrichtung (15) redundant vorhanden ist, insbesondere zumindest einmal auf der Brücke und einmal in einem Notsteuerstand, z.B. im Heck des Schiffes.

## Claims

1. Method for operation of a hybrid propulsion system (1) of a marine vessel, in particular of a navy vessel, having at least one electric motor (2) and at least one internal combustion engine (3), in particular a gas turbine, as propulsion units which individually or jointly drive at least one forward propulsion unit (4), for example a propeller (4b) of the marine vessel depending on the requirement, for example the marine vessel speed, wherein the respective power outputs (P_{E} and P_{G}) of the propulsion units (2, 3) to the at least one forward propulsion unit (4) are controlled by a control device (15) as a function of a predeterminable nominal value (S), for example a nominal value for the propeller rotation speed or the marine vessel speed, and a predeterminable operating mode (B), such that a total power (P_{S}) which is dependent on the nominal value (S) is emitted to the at least one forward propulsion unit (4) as a result of the sum of these power outputs (P_{E} and P_{G}), wherein this total power output is split between the power outputs (P_{E} and P_{G}) of the individual propulsion units (2, 3) as a function of the nominal value (S) and of the operating mode (B),
**characterized in that** the total power output and/or the split in the total power output between the individual propulsion units (2, 3) is controlled taking account of limit values for their rate of change and/or **in that** the split of the total power output is additionally controlled as a function of rate of change of the nominal value (S).

2. Method as claimed in Claim 1,
**characterized in that**, during the operation of the hybrid propulsion system (1), the at least one or each forward propulsion unit (4) is mechanically firmly coupled or at least can be mechanically firmly coupled to in each case at least two propulsion units (2, 3), preferably to in each case at least one electric motor and to at least one internal combustion engine.

3. Method as claimed in Claim 1 or 2,
**characterized in that**, during the operation of the hybrid propulsion system (1), the at least one internal combustion engine (2), and preferably also the at least one electric motor (3), is or are mechanically coupled to the forward propulsion unit (4) to be driven and is or are decoupled therefrom as a function of the requirement.

4. Method as claimed in one of the preceding claims,
**characterized in that** the connection or disconnection of the propulsion units (2, 3) to and from the at least one forward propulsion unit (4), preferably including mechanical coupling or decoupling of propulsion units (2, 3), in particular of the at least one internal combustion engine, to and from the at least one forward propulsion unit (4) is also controlled via the control of the power split.

5. Method as claimed in one of the preceding claims,
**characterized in that** the predeterminable operating mode (B) is an operating mode in which the exhaust-gas emissions and/or noise emissions and/or the heat emissions from the hybrid propulsion system (1), preferably including internal combustion engines (12) for the production of the electrical power for the at least one electric motor (2), are a minimum.

6. Method as claimed in one of Claims 1 to 4,
**characterized in that** the predeterminable operating mode (B) is an operating mode in which the total fuel consumption of the hybrid propulsion system (1), preferably including internal combustion engines (12) for the production of the electrical power for the at least one electric motor (2), is a minimum.

7. Method as claimed in one of the preceding claims,
**characterized in that** the total power output and the splitting of the total power output between the propulsion units (2, 3) are controlled on the basis of characteristic data and/or of characteristic lines (21, 23) of the assembly of the propulsion units (2, 3).

8. Method as claimed in Claim 7,
**characterized in that** different characteristic data and/or characteristics (21, 23) is or are in each case stored for different operating modes in the control device (15), wherein the characteristic data and/or characteristic lines (21, 23) which is or are relevant for control of the power split for a predeterminable operating mode is or are selected as a function of the predeterminable operating mode (B).

9. Method as claimed in one of the preceding claims,
**characterized in that** the nominal value (S) is predetermined by a manually controllable speed lever (41) or an autopilot system.

10. Method as claimed in one of the preceding claims,
**characterized in that** a power output from a propulsion unit (2, 3) is connected to or disconnected from a forward propulsion unit (4) without any torque surges.

11. Method as claimed in one of the preceding claims,
**characterized in that** each of the propulsion units (2, 3) can emit a maximum power which is less than the total power required as a maximum for fuel propulsion of the marine vessel.

12. Method as claimed in one of the preceding claims,
**characterized in that** the at least one electric motor (2) can emit torque continuously variably at a rotation speed range from zero up to the maximum rotation speed (nmax) of the forward propulsion unit or units (4), below its limit characteristic line (20).

13. Method as claimed in one of the preceding claims,
**characterized in that** ripples in actual values (I), which correspond to the nominal value (S), for example in actual values recorded by rotation speed sensors for the rotation speed of a propeller shaft, which ripples are caused by torque fluctuations in the forward propulsion units (4), are suppressed in the control of the power outputs (P_{E}, P_{G}) of the propulsion units (2, 3).

14. Method as claimed in one of the preceding claims,
**characterized in that** the at least one electric motor (2) is used as the main propulsion system for propulsion of the marine vessel for a lower speed range of the marine vessel, and the at least one internal combustion engine (3) is used on its own or in conjunction with the at least one electric motor (2) as the main propulsion system for a higher speed range of the marine vessel up to the maximum speed.

15. Method as claimed in one of the preceding claims,
**characterized in that**, in the lower speed range, the at least one electric motor (2) carries out the rotation speed control of the forward propulsion unit or units (4) and, in the higher speed range, the at least one internal combustion engine (3) carries out the rotation speed control of the forward propulsion unit or units (4), wherein, when the at least one electric motor (2) is being operated together with the at least one internal combustion engine (3), the internal combustion engine (3) carries out the rotation speed control of the forward propulsion unit or units (4), and the rotation speed of the electric motor (2) is controlled by the forward propulsion unit (4) or by the internal combustion engine (3) and, governed by the nominal value preset, emits a torque to the forward propulsion unit or units such that the torques which are respectively emitted by the internal combustion engine (3) and the electric motor (2) are added in the forward propulsion unit or units (4).

16. Method as claimed in one of the preceding claims,
**characterized in that** a hybrid propulsion system (1) is used which has two and only two electric motors (2) and one and only one gas turbine (3) as propulsion units, and two and only two propeller shafts (4a) each having one propeller (4b) as forward propulsion units (4), wherein the propeller shafts (4a) are passed through a gearbox (6) via which the propeller shafts (4a) can be coupled to the gas turbine (3), and wherein each of the propeller shafts (4a) can be coupled to in each case one of the electric motors (2) at its end remote from the propeller (4b), without an intermediate gearbox.

17. Apparatus (50) for carrying out the method as claimed in one of the preceding claims for a hybrid propulsion system (1) in a marine vessel, in particular a navy vessel, having at least one electric motor (2) and at least one internal combustion engine (3), in particular a gas turbine, as propulsion units which individually or jointly drive at least one forward propulsion unit (4), for example a propeller (4b) of the marine vessel depending on the requirement, for example the marine vessel speed, wherein the apparatus (50) comprises a nominal value transmitter (41) for presetting a nominal value (S), for example a nominal value for the rotation speed of a propeller (4b) or for the marine vessel speed, an operating mode transmitter (44) for presetting an operating mode (B), and a control device (15) which is designed to control the power output (P_{E} or P_{G}) of each of the propulsion units (2, 3) to the at least one forward propulsion unit (4) such that a total power (P_{S}) which is dependent on the nominal value (S) can be emitted to the at least one forward propulsion unit (4) as a result of the sum of these power outputs (P_{E} and P_{G}), and in this case the total power output is split between the power outputs (P_{E} and P_{G}) of the individual propulsion units (2, 3) as a function of the nominal value (S) and of the operating mode (B),
**characterized in that** the control device (15) has limiting means (51) for limiting the rates of change of the total power output and/or the split in the total power output between the individual propulsion units (2, 3) and/or **in that** the control device (15) additionally controls the split in the total power output between the individual propulsion units (2, 3) as a function of the rate of change of the nominal value (S).

18. Apparatus (50) as claimed in Claim 17,
**characterized in that**, during the operation of the hybrid propulsion system (1), the at least one or each forward propulsion unit (4) is mechanically firmly coupled or can be mechanically firmly coupled to in each case at least two propulsion units (2, 3), preferably to in each case at least one electric motor and to at least one internal combustion engine.

19. Apparatus as claimed in Claim 17 or 18,
**characterized in that** the at least one internal combustion engine (2), preferably also the at least one electric motor (3), can be mechanically coupled to the forward propulsion unit (4) to be driven and/or can be decoupled therefrom as a function of the requirement during operation of the hybrid propulsion system (1).

20. Apparatus as claimed in one of Claims 17 to 19,
**characterized in that** the control device (15) is designed to also control the connection or disconnection of the propulsion units (2, 3) to and from the at least one forward propulsion unit (4) via the control of the power split, preferably including mechanical coupling or decoupling of propulsion units (2, 3), in particular of the at least one internal combustion engine, to and from the at least one forward propulsion unit (4).

21. Apparatus (50) as claimed in one of Claims 17 to 20,
**characterized in that** the nominal value transmitter is a manually operable speed lever (41) or an autopilot system.

22. Apparatus (50) as claimed in one of Claims 17 to 21,
**characterized by** propulsion system controllers (32), which are associated with the individual propulsion units (2, 3), for controlling their respective power output (P_{E} or P_{G}), wherein the control device (15) controls the power output (P_{E} or P_{G}) of the propulsion units (2, 3) by presetting rotation speed nominal values or torque nominal values for the propulsion system controllers (32).

23. Apparatus (50) as claimed in one of Claims 17 to 22,
**characterized in that** characteristic data and/or characteristic lines (21, 23) of the assembly of the propulsion units (2, 3) are stored in the control device (15), in order to control the total power output and/or the split in the total power output between the power outputs (P_{E}, P_{G}) of the individual propulsion units (2, 3).

24. Apparatus (50) as claimed in one of Claims 17 to 23,
**characterized in that**, in order to control the power output (P_{E} or P_{G}) of the propulsion units (2, 3), the apparatus (50) has sensors (52) for detection of at least one actual value (I), which corresponds to the at least one nominal value (S), for example of an actual value for the rotation speed of a propeller shaft, and filter means (53) for suppression of ripples in the actual values (I) caused by torque fluctuations of the forward propulsion units (4).

25. Apparatus (50) as claimed in one of Claims 17 to 24, **characterized in that** the control device (15) is provided in a redundant form, in particular at least once on the bridge and once at an emergency control station, for example in the stern of the marine vessel.

## Revendications

1. Procédé pour faire fonctionner un système ( 1 ) d'entraînement hybride d'un bâtiment de navigation, notamment d'un bâtiment de navigation militaire, comprenant au moins un moteur ( 2 ) électrique et au moins une machine ( 3 ) à combustion interne, notamment une turbine à gaz, comme groupe d'entraînement qui, suivant les besoins, par exemple suivant la vitesse du bâtiment de navigation, entraîne individuellement ou en combinaison au moins un groupe ( 4 ) de propulsion, par exemple une hélice ( 4b ), du bâtiment de navigation, les groupes ( 2, 3 ) d'entraînement étant, en ce qui concerne leur puissance ( P_{E} et P_{G} ) cédée respectivement au au moins un groupe ( 4 ) de propulsion, commandés par un dispositif ( 15 ) de commande en fonction d'une valeur ( S ) de consigne pouvant être donnée, par exemple d'une valeur de consigne pour la vitesse de rotation de l'hélice ou pour la vitesse du bâtiment de navigation et d'un type ( B ) de fonctionnement pouvant être donné de manière à céder, par la somme de ces puissances ( P_{E} et P_{G} ) cédées, une puissance ( P_{S} ) totale dépendant de la valeur ( S ) de consigne au au moins un groupe ( 4 ) de propulsion, la répartition de cette puissance totale cédée entre les puissances ( P_{E} et P_{G} ) cédées par les groupes ( 2, 3 ) individuels s'effectuant en fonction de la valeur ( S ) de consigne et du type ( B ) de fonctionnement,
**caractérisé en ce que** la puissance totale cédée et/ou la répartition de la puissance totale cédée entre les groupes ( 2, 3 ) d'entraînement individuels est commandée en tenant compte de valeurs limites de leur variation dans le temps et/ou **en ce que** la répartition de la puissance totale cédée est commandée supplémentairement en fonction d'une variation dans le temps de la valeur ( S ) de consigne.

2. Procédé suivant la revendication 1,
**caractérisé en ce que**, pendant le fonctionnement du système ( 1 ) d'entraînement hybride, le au moins un groupe ( 4 ) de propulsion ou chaque groupe ( 4 ) de propulsion est accouplé mécaniquement ou au moins peut l'être à respectivement au moins deux groupes ( 2, 3 ) d'entraînement, de préférence respectivement à au moins un moteur électrique et à au moins une machine à combustion interne.

3. Procédé suivant la revendication 1 ou 2,
**caractérisé en ce que**, pendant le fonctionnement du système ( 1 ) d'entraînement hybride, en fonction des besoins, la au moins une machine ( 2 ) à combustion interne, de préférence aussi le au moins un moteur ( 3 ) électrique, est accouplé mécaniquement au groupe ( 4 ) de propulsion à entraîner et en est désaccouplée.

4. Procédé suivant l'une des revendications précédentes,
**caractérisé en ce que**, il s'effectue par la commande de la répartition de puissance également une commande du branchement des groupes ( 2, 3 ) d'entraînement au au moins un groupe ( 4 ) de propulsion ou de leur débranchement, y compris de préférence un accouplement mécanique des groupes ( 2, 3 ) d'entraînement, notamment de la au moins une machine à combustion interne au au moins groupe de propulsion ou de leur désaccouplement du au moins un groupe ( 4 ) de propulsion.

5. Procédé suivant l'une des revendications précédentes,
**caractérisé en ce que** le type ( B ) de fonctionnement qui peut être donné est un type de fonctionnement, dans lequel des émissions de gaz perdus et/ou des émissions de fumée et/ou les émissions de chaleur du système ( 1 ) d'entraînement hybride, y compris de préférence de machines ( 12 ) à combustion interne pour la production de l'énergie électrique pour le au moins un moteur ( 2 ) électrique, sont minimales.

6. Procédé suivant l'une des revendications 1 à 4,
**caractérisé en ce que** le type ( B ) de fonctionnement qui peut être donné, est un type de fonctionnement, dans lequel la consommation totale de carburant du système ( 1 ) d'entraînement hybride, y compris de préférence de machines ( 12 ) à combustion interne pour la production d'énergie électrique pour le au moins un moteur ( 2 ) électrique, est minimale.

7. Procédé suivant l'une des revendications précédentes,
**caractérisé en ce que** la puissance totale cédées et la répartition de la puissance totale cédée entre les groupes ( 2, 3 ) d'entraînement est commandée au moyen de données caractéristiques et/ou de courbes ( 21, 23 ) caractéristiques de la combinaison des groupes ( 2, 3 ) d'entraînement.

8. Procédé suivant la revendication 7,
**caractérisé en ce que**, dans le dispositif ( 15 ) de commande sont mémorisées pour des types de fonctionnement différents, respectivement des données caractéristiques et/ou des courbes ( 21, 23 ) caractéristiques différentes, les données caractéristiques et/ou les courbes ( 21, 23 ) caractéristiques pertinentes pour la commande de la répartition de puissance dans un type de fonctionnement, pouvant être donné à l'avance, étant choisies en fonction du type ( B ) de fonctionnement, pouvant être donné à l'avance.

9. Procédé suivant l'une des revendications précédentes,
**caractérisé en ce que** la valeur ( S ) de consigne est donnée à l'avance par un levier ( 41 ) de marche à commande manuelle ou par un système de pilote automatique.

10. Procédé suivant l'une des revendications précédentes,
**caractérisé en ce qu'**une alimentation en une puissance cédée d'un groupe ( 2, 3 ) d'entraînement à un groupe ( 4 ) de propulsion ou un arrêt de cession de puissance d'un groupe ( 2, 3 ) d'entraînement à un groupe ( 4 ) de propulsion s'effectue sans à coup de couple.

11. Procédé suivant l'une des revendications précédentes,
**caractérisé en ce que** chacun des groupes ( 2, 3 ) d'entraînement peut céder une puissance maximale qui est plus petite que toute la puissance maximale nécessaire pour la propulsion du bateau.

12. Procédé suivant l'une des revendications précédentes,
**caractérisé en ce que** le au moins un moteur ( 2 ) électrique peut céder un couple de rotation d'une manière continue en dessous de sa courbe ( 20 ) caractéristique limite dans une plage de vitesse de rotation allant de zéro jusqu'à la vitesse de rotation maximum ( nmax ) du groupe ou des groupes ( 4 ) de propulsion.

13. Procédé suivant l'une des revendications précédentes,
**caractérisé en ce que**, lors de la commande de la puissance ( P_{E} et P_{G} ) cédée par les groupes ( 2, 3 ) d'entraînement, on supprime des ondulations, provoquées par des fluctuations de couple de rotation des groupes ( 4 ) de propulsion, de valeurs ( I ) réelles correspondant à la valeur ( S ) de consigne, par exemple, de valeurs réelles détectées par les capteurs de vitesse de rotation pour la vitesse de rotation d'un arbre d'hélice.

14. Procédé suivant l'une des revendications précédentes, **caractérisé en ce que** le au moins un moteur ( 2 ) électrique est utilisé comme entraînement principal pour l'entraînement du bâtiment de navigation dans une plage de vitesse inférieure du bâtiment de navigation et la au moins une machine ( 3 ) à combustion interne, seule ou en combinaison avec le au moins un moteur ( 2 ) électrique, comme entraînement principal pour une plage de vitesse plus grande du bâtiment de navigation jusqu'à la vitesse la plus grande.

15. Procédé suivant l'une des revendications précédentes, **caractérisé en ce que**, dans la plage de vitesse inférieure, le au moins un moteur ( 2 ) électrique prend en charge la commande de la vitesse de rotation du groupe ou des groupes ( 4 ) de propulsion et, dans la plage de vitesse plus grande, la au moins une machine ( 3 ) à combustion interne prend en charge la commande de la vitesse de rotation du groupe ou des groupes ( 4 ) de propulsion, dans lequel, dans le fonctionnement en combinaison du au moins un moteur ( 2 ) électrique avec la au moins une machine ( 3 ) à combustion interne, la machine ( 3 ) à combustion interne prend en charge la commande de la vitesse de rotation du groupe ou des groupes ( 4 ) de propulsion et le moteur ( 2 ) électrique est commandé dans sa vitesse de rotation par le groupe ( 4 ) de propulsion ou par la machine ( 3 ) à combustion interne et cède d'une manière déterminée par la valeur de consigne prescrite un couple de rotation tel au groupe ou aux groupes de propulsion que les couples de rotation cédés respectivement par la machine ( 3 ) à combustion interne et par le moteur ( 2 ) électrique s'additionnent dans le groupe de propulsion ou dans les groupes ( 4 ) de propulsion.

16. Procédé suivant l'une des revendications précédentes,
**caractérisé en ce qu'**il est appliqué pour un système ( 1 ) d'entraînement hybride, qui a exactement deux moteurs électriques et exactement une turbine ( 3 ) à gaz comme groupes d'entraînement et exactement deux arbres ( 4a ) d'hélice ayant respectivement une hélice ( 4b ) comme groupes ( 4 ) de propulsion, les arbres ( 4a ) d'hélice étant commandés par une transmission ( 6 ) par laquelle les arbres ( 4 ) d'hélice peuvent être accouplés à la turbine ( 3 ) à gaz et dans lequel chacun des arbres ( 4a ) d'hélice peut, à son bout, loin de l'hélice ( 4b ), être accouplé à respectivement l'un des moteurs ( 2 ) électriques sans transmission intermédiaire.

17. Dispositif ( 50 ) pour la mise en oeuvre du procédé suivant l'une des revendications précédentes dans un système ( 1 ) d'entraînement hybride d'un bâtiment de navigation, notamment d'un bâtiment de navigation militaire, comprenant au moins un moteur ( 2 ) électrique et au moins une machine ( 3 ) à combustion interne notamment une turbine à gaz comme groupes d'entraînement qui, suivant les besoins, par exemple suivant la vitesse du bâtiment ( 2 ) de navigation entraînent individuellement ou en combinaison au moins un groupe ( 4 ) de propulsion, par exemple une hélice ( 4b ) du bâtiment de navigation, le dispositif ( 50 ) comprenant un indicateur ( 41 ) de valeur de consigne pour prescrire une valeur ( S ) de consigne, par exemple une valeur de consigne de la vitesse de rotation d'une hélice ( 4b ) ou de la vitesse du bâtiment de navigation, un indicateur ( 44 ) de type de fonctionnement pour prescrire un type ( B ) de fonctionnement et un dispositif ( 15 ) de commande, qui est conçu pour commander les groupes ( 2, 3 ) d'entraînement en ce qui concerne leur puissances ( P_{E} ou P_{G} ) cédées respective à au moins un groupe ( 4 ) de propulsion de manière à pouvoir céder au au moins un groupe ( 4 ) de propulsion, par la somme de ces puissances ( P_{E} ou P_{G} ) cédées, une puissance ( PS ) totale qui dépend de la valeur ( S ) de consigne et à effectuer ainsi la répartition de ces puissances totales cédées entre les puissances ( P_{E} et P_{G} ) cédées par les divers groupes ( 2, 3 ) d'entraînement en fonction de la valeur ( S ) de consigne et du type ( B ) de fonctionnement,
**caractérisé en ce que** le dispositif ( 15 ) de commande comprend des moyens ( 51 ) de limitation de variations dans le temps de la puissance totale cédée et/ou la répartition de la puissance totale cédée entre les divers groupes ( 2, 3 ) d'entraînement et/ou **en ce que** le dispositif ( 15 ) de commande commande la répartition de la puissance totale cédée entre les divers groupes ( 2, 3 ) d'entraînement supplémentairement en fonction de la variation dans le temps de la valeur ( S ) de consigne.

18. Dispositif ( 50 ) suivant la revendication 17,
**caractérisé en ce que**, pendant le fonctionnement du système ( 1 ) d'entraînement hybride, le au moins un groupe ( 4 ) de propulsion ou chaque groupe ( 4 ) de propulsion est accouplé de manière fixe mécaniquement ou peut l'être à respectivement au moins deux groupes ( 2, 3 ) d'entraînement, de préférence à respectivement au moins un moteur électrique et à au moins une machine à combustion interne.

19. Dispositif suivant la revendication 17 ou 18,
**caractérisé en ce que** la au moins une machine ( 2 ) à combustion interne, de préférence également le au moins un moteur ( 3 ) électrique, peut ou peuvent, pendant le fonctionnement du système ( 1 ) d'entraînement hybride en fonction des besoins, être accouplés au groupe ( 4 ) de propulsion à entraîner et en être désaccouplés.

20. Dispositif suivant l'une des revendications 17 à 19,
**caractérisé en ce que** le dispositif ( 15 ) de commande est conçu pour qu'il s'effectue par la commande de la répartition de puissance également une commande du branchement des groupes ( 2, 3 ) d'entraînement au au moins un groupe ( 4 ) de propulsion ou de leur débranchement, y compris de préférence un accouplement mécanique des groupes ( 2, 3 ) d'entraînement, notamment de la au moins une machine à combustion interne, au au moins groupe de propulsion ou de leur désaccouplement du au moins un groupe ( 4 ) de propulsion.

21. Dispositif ( 50 ) suivant l'une des revendications 17 à 20,
**caractérisé en ce que** l'indicateur de valeur de consigne est un levier ( 41 ) de marche à commande manuelle ou un système de pilote automatique.

22. Dispositif ( 50 ) suivant l'une des revendications 17 à 21,
**caractérisé par** des commandes ( 32 ) d'entraînement associées à des groupes ( 2, 3 ) d'entraînement individuels pour la commande de leur puissance ( P_{E} et P_{G} ) respective cédée, le dispositif ( 15 ) de commande, commandant la puissance ( P_{E} et P_{G} ) cédée par les groupes ( 2, 3 ) d'entraînement en prescrivant des valeurs de consigne de vitesse de rotation et des valeurs de consigne de couple de rotation aux commandes ( 32 ) d'entraînement.

23. Dispositif ( 50 ) suivant l'une des revendications 17 à 22,
**caractérisé en ce que**, dans le dispositif ( 15 ) de commande sont mémorisées des données caractéristiques et/ou des courbes ( 21, 23 ) caractéristiques de la combinaison des groupes ( 2, 3 ) d'entraînement pour la commande de la puissance totale cédée et/ou de la répartition de la puissance totale cédée entre les puissances ( P_{E} et P_{G} ) cédées par les divers groupes ( 2, 3 ) d'entraînement.

24. Dispositif ( 50 ) suivant l'une des revendications 17 à 23,
**caractérisé en ce qu'**il comprend, pour la commande de la puissance ( P_{E} et P_{G} ) cédée par les groupes ( 2, 3 ) d'entraînement, des capteurs ( 52 ) de détection d'au moins une valeur ( I ) réelle correspondant à la au moins une valeur ( S ) de consigne, par exemple, d'une valeur réelle de la vitesse de rotation d'un arbre d'hélice et des moyens ( 53 ) de filtrage pour la suppression d'ondulations des valeurs ( I ) réelles provoquées par des fluctuations de couple de rotation des groupes ( 4 ) de propulsion.

25. Dispositif ( 50 ) suivant l'une des revendications 17 à 24,
**caractérisé en ce que** le dispositif ( 15 ) de commande est présent de manière redondante, notamment au moins une fois sur le pont et une fois dans une cabine de commande d'urgence, par exemple, à la poupe du bâtiment de navigation.
